# EUROPÄISCHE PATENTANMELDUNG

(11) **EP 4 491 908 A1**
(43) Veröffentlichungstag der Anmeldung: **15.01.2025**
(21) Anmeldenummer: 23185506.5
(22) Anmeldetag: 14.07.2023
(51) Int. Cl.: F16H 57/021, F16C 35/06

(54) **LAGERANORDNUNG, INSBESONDERE FÜR WINDKRAFTANLAGEN**

(71) Anmelder: Flender GmbH, 46395 Bocholt (DE)
(72) Erfinder: THELING, Julian, 46395 Bocholt (DE); NAFE, Michael, 46395 Bocholt (DE); WILTING, Maik, 46395 Bocholt (DE); DEGELING, Markus, 46395 Bocholt (DE)
(74) Vertreter: Michalski Hüttermann & Partner Patentanwälte mbB

(57) **Zusammenfassung**

Lageranordnung 10 für einen Flanschbereich 4 eines Planetengetriebes 2 zur Anbindung einer Generatoreinheit an den Flanschbereich 4, umfassend ein Getriebegehäuse 12 und eine hierin mittelbar aufgenommene erste Wälzlagerung 20 zur Lagerung eines um eine Drehachse A_{D} drehbaren Planetenträgers 6 des Planetengetriebes 2, ein Lagergehäuse 14 und ein über eine zweite Wälzlagerung 30 in dem Lagergehäuse 14 drehbar gelagertes Wellenelement 16. Das Lagergehäuse 14 ist in axialer Richtung an das erste Getriebegehäuse 12 angesetzt und beaufschlagt zumindest mittelbar einen Außenring 22 der ersten Wälzlagerung 20 in axialer Richtung gegen das erste Getriebegehäuse 12. Hierdurch ist eine komplette Montage und Demontage der Lagerkassette möglich, entweder nachdem der komplette Generator demontiert wurde oder nachdem der Rotor des Generators zumindest teilweise demontiert wurde, so dass durch das Statorgehäuse der Zugang zur Lagerkassette hergestellt ist. Nach Demontage der Lagerkassette ist der Austausch der ersten Wälzlagerung 20 zur Lagerung des Planetenträgers 16 möglich.

## Beschreibung

Die Erfindung betrifft eine Lageranordnung für einen Flanschbereich eines Planetengetriebes zur Anbindung einer Generatoreinheit an den Flanschbereich, mit einem Getriebegehäuse und einer hierin zumindest mittelbar aufgenommenen ersten Wälzlagerung zur Lagerung eines Planetenträgers des Planetengetriebes, einem Lagergehäuse und einem über eine zweite Wälzlagerung in dem Lagergehäuse drehbar gelagertes Wellenelement, wobei das Lagergehäuse in axialer Richtung an das Getriebegehäuse angesetzt ist.

Im Bereich der Windkraftanlagen existiert ein Trend hin zu mittelschnelllaufenden Getriebekonzepten mit direkt angeflanschtem Generator an das Getriebe. Dabei wird das Ausgangswellenelement des Getriebes als Hohlwelle ausgeführt und direkt mit dem Rotor des Generators verbunden. Die Lagerung der Hohlwelle dient dabei zusätzlich als Lagerung des Rotors des Generators, d.h. der Rotor ist zumindest teilweise in dem vorgeschalteten Getriebe gelagert. In dieser Konfiguration kann die Lagerung der Hohlwelle auch als Generatorlagerung bezeichnet werden. Daher müssen hohe Positionstoleranzen und eine genaue Einstellung der Vorspannung dieser Lagerung in dem Getriebe eingehalten werden. Durch die Überlagerung der Gewichtskräfte und elektromagnetischen Kräfte des Generators liegen hohe Beanspruchungen vor, die zu einer Beschädigung dieser Lagerung führen kann, so dass eine Reparatur zu erfolgen hat. Eine derartige Anordnung zeigt beispielsweise die EP 3 653 907 A1.

In dem Getriebe sind der Hohlwelle eine oder mehrere Getriebestufen vorgeschaltet. Aufgrund der erforderlichen hohen Leistungsdichte werden in der Regel Planetengetriebe mit drehbarem Planetenträger verwendet. Die Lagerung des Planetenträgers stellt die Positionierung der Getriebeelemente sicher und muss dabei insbesondere Axialkräfte der vorgeschalteten Planetenstufen oder des Rotors im Regel- und im Reversierbetrieb abstützen.

Üblicherweise besteht die als solche bezeichnete Generatorlagerung aus zwei Kegelrollenlagern, die im stationären Generatorflansch montiert werden und die Hohlwelle aufnehmen, bzw. lagern. Im Schadensfall muss zunächst der angeflanschte Generator komplett demontiert und der Generatorflansch erwärmt werden, um die Hohlwelle samt Lager entfernen zu können. Bei der anschließenden erneuten Montage muss das Lagerspiel erneut eingestellt werden, wofür ggf. mehrere Montage- und Demontagevorgänge der Lager auf dem Turm erfolgen müssen.

Der Planetenträger kann über je ein Wälzlager auf der rotorseitigen sowie auf der generatorseitigen Trägerwange gelagert sein. Dabei nimmt im Allgemeinen das rotorseitige Lager die Axialkräfte im Reversierbetrieb auf und das generatorseitige Lager nimmt die Axialkräfte im Regelbetrieb auf. Die axiale Abstützung des generatorseitigen Lagers für den Regelbetrieb erfolgt über einen eine axiale Anlage bildenden Abstützflansch im Gehäuse, sodass eine Demontage des Lageraußenringes nur in Richtung des Rotors möglich ist. Zusätzlich wird die Zugänglichkeit durch die dahinter liegende Generatorlagerung verhindert. Dies bedeutet, dass im Schadensfall das Getriebe vom Turm gebracht, damit es geöffnet werden kann und die entsprechende Stufe ausgebaut werden kann. Es besteht folglich ein Bedürfnis, die Zugänglichkeit des beschriebenen Bereichs, insbesondere in einem Reparaturfall, zu verbessern.

Es ist die Aufgabe der Erfindung Maßnahmen aufzuzeigen, die eine verbesserte Zugänglichkeit zu der generatorseitigen Lagerung der hinteren Planetenstufe ermöglichen.

Die Lösung der Aufgabe erfolgt durch eine Lageranordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Lageranordnung für einen Flanschbereich eines Planetengetriebes zur Anbindung einer Generatoreinheit an den Flanschbereich, mit einem Getriebegehäuse und eine hierin zumindest mittelbar aufgenommene erste Wälzlagerung zur Lagerung eines um eine Drehachse A_{D} drehbaren Planetenträgers des Planetengetriebes, einem Lagergehäuse und einem über eine zweite Wälzlagerung in dem Lagergehäuse drehbar gelagertes Wellenelement, wobei das Lagergehäuse in axialer Richtung an das Getriebegehäuse angesetzt ist und zumindest mittelbar einen Außenring der ersten Wälzlagerung in axialer Richtung gegen das Getriebegehäuse beaufschlagt, um die Wälzlagerung zur Aufnahme von Axialkräften in axialer Richtung zu halten.

Die Drehachse A_{D} legt vorliegend die Axialrichtung fest, so dass sich aus dieser Axialrichtung die jeweiligen Radialrichtungen ergeben. Das Wellenelement kann je nach zugrundliegender Konfiguration als Hohlwelle ausgeführt sein. Das Wellenelement kann in dieser Konfiguration über eine Steckverzahnung mit einer im Drehmomentfluss vorgelagerten Sonnenwelle einer Planetenstufe des Planetengetriebes formschlüssig verbunden sein. Das hohl ausgeführte Wellenelement kann ein Pitchrohr in sich aufnehmen, durch das elektrische und/oder hydraulische Leitungen hindurchgeführt sind.

Bei dem Getriebegehäuse kann es sich um eine Einhausung zur Aufnahme des Planetengetriebes und ggf. der mehreren Planetenstufen handeln. Das Getriebegehäuse kann mehrteilig zusammengesetzt sein. In dem Getriebegehäuse kann beispielsweise eine als Hohlrad einer Planetenstufe fungierende Innenverzahnung integriert sein. Das Getriebegehäuse kann nach radial innen gezogene Flanschbereiche umfassen, an denen sich Wälzlager der Planetenstufen abstützen können und über die während des Betriebs entstehende Axialkräfte in das Getriebegehäuse eingeleitet werden können.

Das Lagergehäuse kann als Flanschabschnitt des gesamten Getriebegehäuses ausgeführt sein, wobei dieser Flanschabschnitt gegen das erste Getriebeelement über eine entsprechende Anlageflächenpaarung angesetzt ist und auf der anderen Seite mit einem Deckelelement verschlossen ist. In dem Deckelelement können die Durchführung für eine oder mehrere Getriebewellen und entsprechende Abdichtungen vorgesehen sein.

Bei der ersten Wälzlagerung kann es sich um eine einfache Kegelrollenlagerung handeln, die während des Betriebs des Planetengetriebes die entstehenden Axialkräfte teilweise und zumindest mittelbar in das Getriebegehäuse einleitet. Die zweite Wälzlagerung kann mehrere Wälzlager zueinander umfassen, die in einem Verbund zueinander angeordnet sind und die als Pendelrollenlager, als Kegelrollenlager, als Schrägkugellager oder als Axial-Pendelrollenlager ausgebildet sein können. Es kann eine O-Anordnung oder eine X-Anordnung vorgesehen sein.

Zur Einstellung der zweiten Wälzlagerung kann auf dem Wellenelement eine Nutmutter und ein ringförmiges Distanzelement vorgesehen sein, die den Innenring eines der beiden Wälzlager zur Erzeugung eines Lagerspiels und/oder einer Lagervorspannung beaufschlagen. Das Wellenelement und das Distanzelement bilden jeweils komplementär ausgerichtete Anlageschultern aus und die Nutmutter legt das Distanzelement in einer axialen Position gegenüber dem Wellenelement formschlüssig fest.

Indem das Lagergehäuse in axialer Richtung an das Getriebegehäuse angesetzt ist, haben Getriebegehäuse und Lagergehäuse eine definierte axiale Position zueinander. Das Lagergehäuse steht zudem mit dem Außenring der ersten Wälzlagerung zumindest mittelbar in Berührung, sodass der Außenring gegen das Getriebegehäuse beaufschlagt wird und die Wälzlagerung zur Aufnahme von Axialkräften in axialer Richtung gehalten ist.

Das Lagergehäuse, die zweite Wälzlagerung und das über die zweite Wälzlagerung in dem Lagergehäuse drehbar gelagerte Wellenelement kann als Lagerkassette bezeichnet werden, die eine separate Baugruppe gegenüber dem Getriebegehäuse bildet. Die Baugruppe der Lagerkassette kann separat vormontiert werden und als Ganzes an das Getriebegehäuse montiert werden.

Durch die beschriebene Ausführungsform ist eine komplette Montage und Demontage der Lagerkassette möglich. Je nach Ausführung, kann dies durch die rückseitige Öffnung des Generator-Stators oder nach Demontage des Generators erfolgen. Nach Demontage der Lagerkassette ist der Austausch der ersten Wälzlagerung zur Lagerung des Planetenträgers möglich, und zwar ohne Demontage des Gesamtgetriebes vom Turm. Insgesamt ergibt sich eine Reduktion von Wartungskosten und Gewährleistungsansprüchen durch verbesserte Wartungsfähigkeit und eine effektivere Ausnutzung des Bauraums durch eine Integration der Axialkraftabstützung der ersten Wälzlagerung in die Lagerkassette.

In einer bevorzugten Ausgestaltung ist vorgesehen, dass das Lagergehäuse einen axial gerichteten Zentrierabsatz aufweist, der in einer Gehäuseöffnung des Getriebegehäuses einsitzt. Über den Zentrierabsatz kann sichergestellt werden, dass Getriebegehäuse und Lagergehäuse koaxial zueinander positioniert werden können. Insbesondere ist dies in einem Wartungsfall hilfreich, nachdem die Lagerkassette demontiert wurde und anschließend wieder montiert werden kann.

In einer zudem bevorzugten Ausgestaltung weist das Getriebegehäuse einen Radialbund auf, gegen den der Außenring der ersten Wälzlagerung zumindest mittelbar von dem Lagergehäuse beaufschlagt wird. In einer möglichen Ausgestaltung kann vorgesehen sein, dass der Radialbund auf einem gegenüber dem Getriebegehäuse verschraubten Ringelement ausgebildet ist. Über den Radialbund ist eine definierte Positionierung des Außenrings der Wälzlagerung möglich, so dass die Wälzlagerung zur Aufnahme von Axialkräften über das Lagergehäuse in axialer Richtung gehalten ist.

In einer besonders bevorzugten Ausgestaltung ist vorgesehen, dass das Lagergehäuse zumindest über ein Distanzelement den Außenring der ersten Wälzlagerung gegen das Getriebegehäuse beaufschlagt. Über eine Anpassung des axialen Maßes des Distanzelements, das auch als Zwischenelement bezeichnet werden kann, ist es möglich eine Lagervorspannung, ein Lagerspiel oder ein Festsetzen der ersten Wälzlagerung bedarfsgerecht einzustellen. Insbesondere ist es möglich in einem Wartungsfall verschiedene axiale Maße des Distanzelements bereitzuhalten, um bei der Montage nach der Wartung das Lager mit richtig eingestellter Lagervorspannung wieder zusammenzusetzen. In konkreter Ausgestaltung kann vorgesehen sein, dass das Distanzelement in der Gehäuseöffnung des Getriebegehäuses einsitzt und das Distanzelement an dem Zentrieransatz zumindest teilumfänglich anliegt. Weiterhin kann zur Vereinfachung der Montage, insbesondere im Wartungsfall, vorgesehen sein, dass das Lagergehäuse über eine lösbare Verbindung, bspw. eine Verschraubung, gegenüber dem Getriebegehäuse gehalten ist.

Die Aufgabe wird ferner gelöst durch ein Planetengetriebe für eine über einen Rotor angetriebene Windkraftanlage mit zumindest einer in einem Getriebeelement um eine Drehachse A_{D} umlaufenden Planetenstufe, wobei die zumindest eine Planetenstufe einen Planetenträger aufweist und abtriebsseitig des Planetenträgers eine Lageranordnung wie zuvor beschrieben angeordnet ist. Besonders bevorzugt ist dabei vorgesehen, dass die erste Wälzlagerung eine angestellte und einseitig des Planetenträgers angeordnete Kegelrollenlagerung umfasst. Hierbei ist von besonderem Vorteil, dass über diese Kegelrollenlagerung sowohl die Axialkräfte im Regelbetrieb als auch die Axialkräfte im Reversierbetrieb aufgenommen und in das Getriebegehäuse abgeleitet werden. Folglich kann auf eine rotorseitige Lagerung der Planetenträgers verzichtet werden, so dass in diesem Bereich das Getriebegehäuse, insbesondere in einem Flanschbereich, in dem herkömmlich das rotorseitige Wälzlager gehalten worden war, vereinfacht werden kann. Es ist auch denkbar, dass in diesem Bereich auf einen Lagerflansch vollständig verzichtet werden kann. Alternativ kann auch eine aufgelöste Lagerung vorgesehen sein, bei der die erste Wälzlagerung eine Paarung bestehend aus angestellten und in axialer Richtung beidseitig des Planetenträgers angeordneten Kegelrollenlagern umfasst.

Die Aufgabe wird zudem gelöst durch einen Antriebsstrang für eine Windkraftanlage zur drehmomentübertragenden Verbindung eines Rotors mit einem Generator, umfassend eine Hauptlagereinheit mit einem Lagergehäuse und einer Hauptwelle und ein über die Hauptwelle angetriebenes Getriebe, wobei das Getriebe den Generator zumindest mittelbar antreibt, wobei als Getriebe als Planetengetriebe wie zuvor beschrieben ausgebildet ist.

Schließlich wird die Aufgabe gelöst durch eine Windkraftanlage, umfassend eine Gondel, an der drehbar ein Mehrblattrotor und ein Generator angebracht sind, wobei der Mehrblattrotor drehmomentübertragend über einen Antriebsstrang mit dem Generator verbunden ist und der Antriebsstrang wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen ausschnittsweisen Längsschnitt durch ein Planetengetriebe mit herkömmlicher Lageranordnung,
Fig. 2: eine ausschnittsweise Schematisierung eines Planetengetriebes mit beanspruchter Lageranordnung in einer möglichen Ausführung,
Fig. 3: eine ausschnittsweise Schematisierung eines Planetengetriebes mit beanspruchter Lageranordnung in einer alternativen Ausführung,
Fig. 4: eine Detaillierung der Lageranordnung gemäß Fig. 2 mit beanspruchter Lageranordnung in einer weiteren möglichen Ausführung,
Fig. 5 und 6: mögliche Varianten der Aufnahme der Wälzlagerung über eine Lagerhülse und Fig. 7: eine perspektivische Darstellung einer Windkraftanlage.

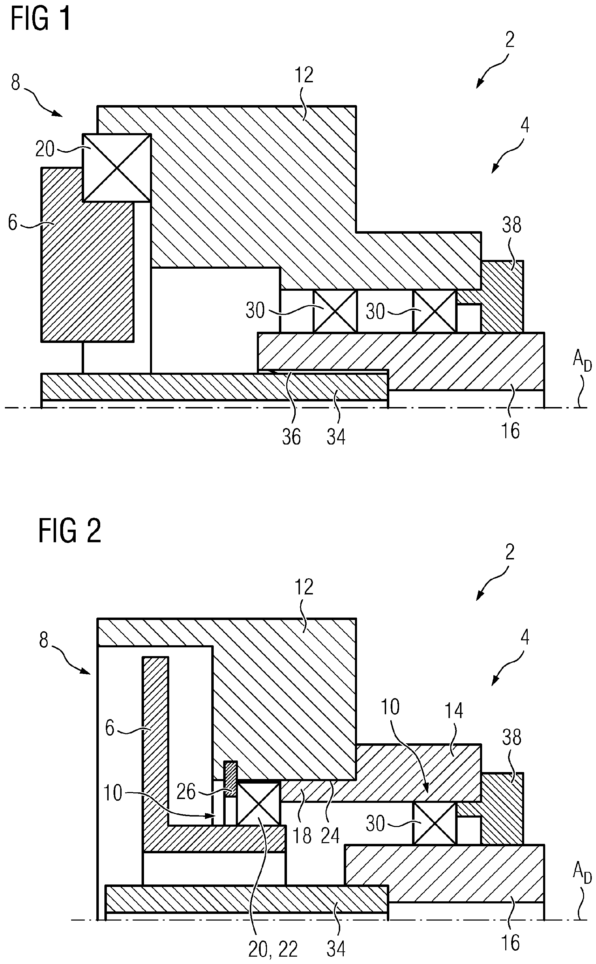

Die Figur 1 zeigt eine herkömmliche Gestaltung einer Lageranordnung 10 in einem Flanschbereich 4 eines Planetengetriebes 2, an das ein Generator angebunden werden kann. Der Generator ist vorliegend nicht dargestellt. Das Planetengetriebe 2 weist ein Getriebegehäuse 12 auf, an das in nicht dargestellter Weise der Generator statisch angebunden werden kann. In dem Getriebegehäuse 12 ist zumindest eine Planetenstufe 8 aufgenommen, von der vorliegend lediglich teilweise ein Planetenträger 6, eine Wälzlagerung 20 des Planetenträgers 6 in dem Getriebegehäuse 12 und eine Sonnenwelle 34 dargestellt ist. Mit A_{D} ist die Drehachse des Planetengetriebes bezeichnet. Weiterhin ist in dem Getriebegehäuse 12 ein als Hohlwelle ausgebildetes Wellenelement 16 über eine Wälzlagerung 30 drehbar gehalten, wobei das Wellenelement 16 koaxial zu der Sonnenwelle 34 angeordnet und mit dieser über eine Kurzverzahnung 36 antriebsverbunden ist. Es ist ein das Getriebegehäuse 12 dichtendes Deckelelement 38 vorgesehen, durch das das Wellenelement 16 hindurchgeführt ist, um einen Rotor des nicht dargestellten Generators anzutreiben.

Die Figur 2 zeigt schematisch und teilweise ausschnittsweise ein Planetengetriebe 2 mit einer erfindungsgemäßen Ausgestaltung der Lageranordnung 10 in einem Flanschbereich 4. Die Figur 2 wird im Wesentlichen bezüglich der relevanten Unterschiede zu Figur 1 beschrieben.

Es ist ein Getriebegehäuse 12 und ein Lagergehäuse 14 vorgesehen. In dem Getriebegehäuse 12 ist weiterhin eine Planetenstufe 8 des Planetengetriebes 2 aufgenommen. Von der Planetenstufe 8 ist lediglich der Planetenträger 6 und die Sonnenwelle 34 dargestellt. Ein Hohlrad und Planetenräder sind nicht dargestellt. Der Planetenträger 6 ist weiterhin über eine erste Wälzlagerung 20 in dem Getriebegehäuse 12 um die Drehachse A_{D} drehbar gelagert. Die erste Wälzlagerung 20 umfasst eine Paarung aus angestellten und einseitig, nämlich generatorseitig, des Planetenträgers 6 angeordnete Kegelrollenlager. Das zweite Wälzlager 30 ist vorliegend nunmehr in dem Lagergehäuse 14 gehalten und das Wellenelement 16, das als Hohlwelle ausgeführt sein kann, ist in dem Lagergehäuse 14 über das zweite Wälzlager 30 um die Drehachse A_{D} drehbar gelagert. Das Lagergehäuse 14, die Wälzlagerung 30 und das Wellenelement 16 bilden Teil einer Lagerkassette, die an das Getriebegehäuse 12 angesetzt und bei Bedarf wieder demontiert werden kann.

Zudem steht das Lagergehäuse 14 derart mit dem der ersten Wälzlagerung 20 in Wechselwirkung, dass das Lagergehäuse 14 zumindest mittelbar den Außenring 22 der ersten Wälzlagerung 20 in axialer Richtung gegen das Getriebegehäuse 12 beaufschlagt. Hierdurch kann über das Lagergehäuse 14 eine Lagervorspannung der ersten Wälzlagerung 20, die in dem Getriebegehäuse 12 gehalten ist, erzeugt und eingestellt werden. Das Lagergehäuse 14 kann einen axial gerichteten Zentrierabsatz 18 aufweisen, der in einer Gehäuseöffnung 24 des Getriebegehäuses 12 einsitzt und über den das Lagergehäuse 14 an dem Außenring 22 der ersten Wälzlagerung 20 anliegt und beaufschlagt. Außerdem kann das Lagergehäuse 14 den Außenring 22 der ersten Wälzlagerung 20 zumindest mittelbar gegen einen Radialbund 26 des Getriebegehäuses 12 beaufschlagen.

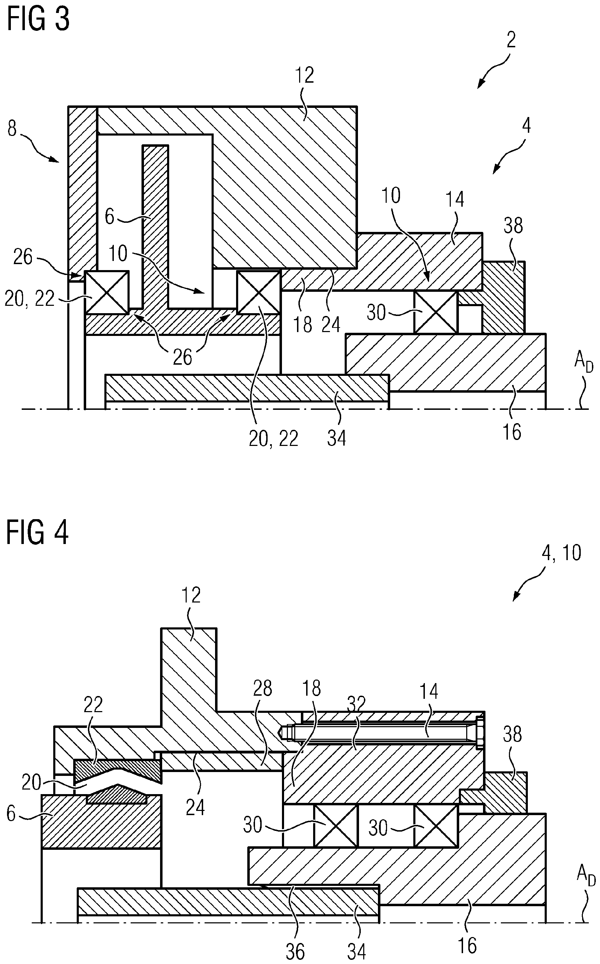

Die Figur 3 zeigt eine alternative Ausgestaltung der ersten Wälzlagerung 20. Die erste Wälzlagerung 20 ist als aufgelöste Lagerung ausgeführt, die angestellte und in axialer Richtung beidseitig des Planetenträgers 6 angeordnete Kegelrollenlager umfasst.

Die Figur 4 zeigt eine mögliche Detaillierung eines Planetengetriebe 2 mit einer erfindungsgemäßen Ausgestaltung der Lageranordnung 10 in einem Flanschbereich 4. In der Figur 4 ist die erste Wälzlagerung 20 entsprechend der Figur 2, d.h. es ist eine Paarung aus angestellten und einseitig des Planetenträgers 6 angeordneten Kegelrollenlagern gezeigt. Auf eine Darstellung der außerdem möglichen Konfiguration, wie sie in der Figur 3 gezeigt ist, wird vorliegend verzichtet. Es kann ein Distanzelement 28 vorgesehen sein, über das das Lagergehäuse 14 den Außenring 22 gegen das Getriebegehäuse 12 beaufschlagt. Denkbar ist auch, dass das Distanzelement 28 mehrteilig aufgebaut ist und einen separaten Einstellring - hier nicht dargestellt - umfasst, über den ein Axialmaß exakt eingestellt werden kann. Das Distanzelement 28 sitzt in der Gehäuseöffnung 24 des Getriebegehäuses 12 ein und bildet in axialer Richtung die Fortsetzung des Zentrierabsatzes 18. Das Lagergehäuse 14 ist über eine umfänglich angeordnete Verschraubung 32 gegenüber dem Getriebegehäuse 12 gehalten.

In der Figur 4 ist die erste Wälzlagerung 20 als angestellte Kegelrollenlagerung in X-Anordnung gezeigt. Über die Kegelrollenlagerung können im Regelbetrieb und auch im Reversierbetrieb die Axialkräfte der Planetenstufe 8 in das Getriebegehäuse 12 abgeleitet werden und zwar auf der Generatorseite der Planetenstufe 8. Durch diese Anordnung der Wälzlagerung 20 kann auf ein Lager rotorseitig der Planetenstufe 8, über das herkömmlich die Axialkräfte im Reversierbetrieb aufgenommen werden, verzichtet werden.

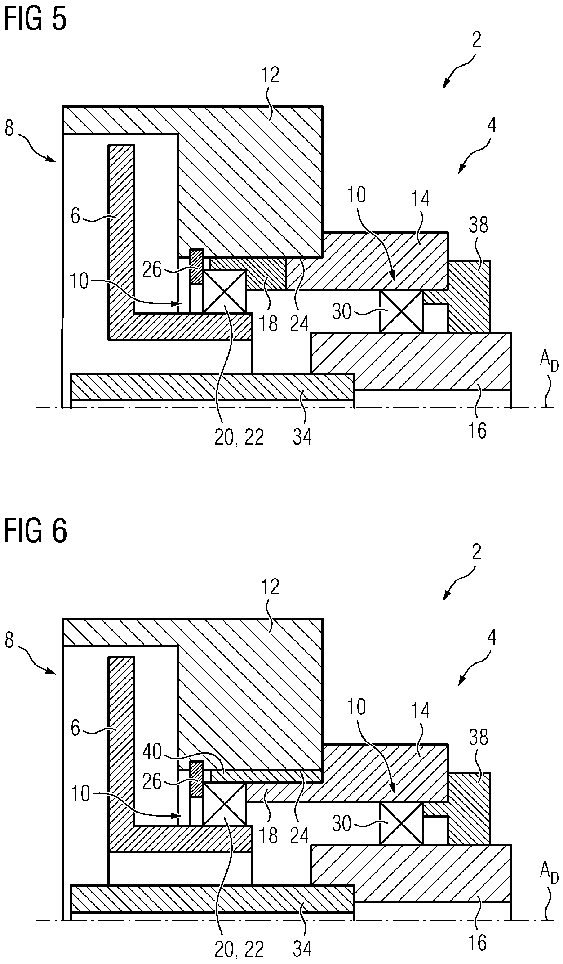

Die Figuren 5 und 6 zeigen Varianten der generatorseitigen Aufnahme der ersten Wälzlagerung 20 innerhalb des Getriebegehäuses 20. Bei den gezeigten Varianten ist eine Lagerhülse 40 vorgesehen, über den die erste Wälzlagerung 20, d.h. ein Außenring 22 der Wälzlagerung 20, in dem Getriebegehäuse 12 einsitzt. Bei der Variante der Lagerhülse 40 der Figur 5 ist die Funktion der Lagerhülse 40 und des Distanzelement 18 - wie zur Figur 40 beschrieben - in einem Bauteil zusammengefasst. Im Vergleich hierzu hat die Lagerhülse 40 bei der Variante der Figur 6 die Funktion der radialen Positionierung des ersten Wälzlager 20 in dem Getriebegehäuse 12, während dem Zentrierabsatz 18 des Lagergehäuses 14 die Funktion der axialen Positionierung des ersten Wälzlagers 20 gegenüber dem Getriebegehäuse 12 zukommt.

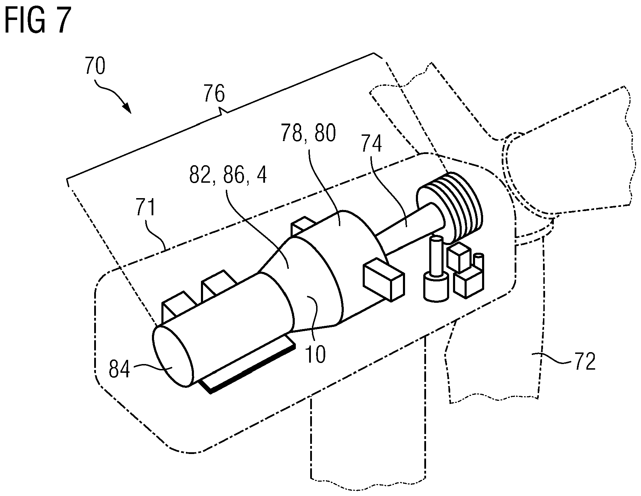

In der Figur 7 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Getriebe 78, das drehmomentübertragend mit der Hauptwelle 74 verbunden ist. Das Getriebe 78 weist zumindest eine Planetenstufe 80 auf und ist wiederum über eine Hohlwellenbaugruppe 82 mit einem Generator 84 gekoppelt. Die Hohlwellenbaugruppe 82 ist in einen sich verjüngenden Gehäuseabschnitt 86 des Getriebes 78 aufgenommen. Der Gehäuseabschnitt 86 kann als eigenständiges Gehäuse 2 gestaltet sein. In der Hohlwellenbaugruppe 82 ist eine Lageranordnung 10 vorgesehen ist. Die Lageranordnung 10 ist gemäß einer der oben beschriebenen Ausführungsformen ausgebildet.

### Bezugszeichenliste

- 2: Planetengetriebe
- 4: Flanschbereich
- 6: Planetenträger
- 8: Planetenstufe
- 10: Lageranordnung
- 12: Getriebegehäuse
- 14: Lagergehäuse
- 16: Wellenelement
- 18: Zentrierabsatz
- 20: Wälzlagerung
- 22: Außenring
- 24: Gehäuseöffnung
- 26: Radialbund
- 28: Distanzelement
- 30: Wälzlagerung
- 32: Verschraubung
- 34: Sonnenwelle
- 36: Kurzverzahnung
- 38: Deckelelement
- 40: Lagerhülse
- 70: Windkraftanlage
- 71: Gondel
- 72: Mehrblattrotor
- 74: Hauptwelle
- 76: Antriebsstrang
- 78: Getriebe
- 80: Planetenstufe
- 82: Hohlwellenbaugruppe
- 84: Generator
- 86: Gehäuseabschnitt

## Patentansprüche

1. Lageranordnung (10) für einen Flanschbereich (4) eines Planetengetriebes (2) zur Anbindung einer Generatoreinheit an den Flanschbereich (4), umfassend
ein Getriebegehäuse (12) und eine hierin zumindest mittelbar aufgenommene erste Wälzlagerung (20) zur Lagerung eines um eine Drehachse A_{D} drehbaren Planetenträgers (6) des Planetengetriebes (2),
ein Lagergehäuse (14) und ein über eine zweite Wälzlagerung (30) in dem Lagergehäuse (14) drehbar gelagertes Wellenelement (16), wobei das Lagergehäuse (14) in axialer Richtung an das Getriebegehäuse (12) angesetzt ist und zumindest mittelbar einen Außenring (22) der ersten Wälzlagerung (20) in axialer Richtung gegen das Getriebegehäuse (12) beaufschlagt, um die Wälzlagerung (20) zur Aufnahme von Axialkräften in axialer Richtung zu halten.

2. Lageranordnung (10) nach Anspruch 1, **dadurch gekennzeichnet, dass** das Lagergehäuse (14) einen axial gerichteten Zentrierabsatz (18) aufweist, der in einer Gehäuseöffnung (24) des Getriebegehäuses (12) einsitzt.

3. Lageranordnung (10) nach Anspruch 1 oder 2, **dadurch gekennzeichnet, dass** ein Außenring (22) der ersten Wälzlagerung (20) über eine Lagerhülse (40) in dem Getriebegehäuse (12) einsitzt.

4. Lageranordnung (10) nach einem der Ansprüche 1 bis 3, **dadurch gekennzeichnet, dass** das Lagergehäuse (14) zumindest über ein Distanzelement (28) einen Außenring (22) der ersten Wälzlagerung (20) beaufschlagt.

5. Lageranordnung (10) nach Anspruch 3 und 4, **dadurch gekennzeichnet, dass** die Lagerhülse (40) und das Distanzelement (28) funktional in einem Bauteil zusammengefasst sind.

6. Lageranordnung (10) nach Anspruch 2 und 5, **dadurch gekennzeichnet, dass** das Distanzelement (28) in der Gehäuseöffnung (24) des Getriebegehäuses (12) einsitzt und das Distanzelement (28) an dem Zentrieransatz (18) zumindest teilumfänglich anliegt.

7. Lageranordnung (10) nach einem der Ansprüche 1 bis 6, **dadurch gekennzeichnet, dass** das Lagergehäuse (14) lösbar gegenüber dem Lagergehäuse (12) gehalten ist, insbesondere über eine umfänglich angeordnete Verschraubung (32).

8. Planetengetriebe (2) für eine über einen Rotor (106) angetriebene Windkraftanlage (100) mit zumindest einer in einem Getriebegehäuse (12) um eine Drehachse A_{D} umlaufenden Planetenstufe (8), wobei die zumindest eine Planetenstufe (8) einen Planetenträger (6) aufweist und abtriebsseitig des Planetenträgers eine Lageranordnung (10) nach einem der vorangegangenen Ansprüche aufweist.

9. Planetengetriebe nach Anspruch 8, **dadurch gekennzeichnet, dass** die erste Wälzlagerung (20) eine angestellte und einseitig des Planetenträgers (6) angeordnete Kegelrollenlager umfasst.

10. Planetengetriebe nach Anspruch 8, **dadurch gekennzeichnet, dass** die erste Wälzlagerung (20) angestellte und in axialer Richtung beidseitig des Planetenträgers (6) angeordnete Kegelrollenlager umfasst.

11. Antriebsstrang (102) für eine Windkraftanlage (100) zur drehmomentübertragenden Verbindung eines Rotors (106) mit einem Generator (112), umfassend eine Hauptlagereinheit (108) mit einem Lagergehäuse (120) und einer Hauptwelle (118) und ein über die Hauptwelle (118) angetriebenes Getriebe (10), wobei das Getriebe (10) den Generator (112) zumindest mittelbar antreibt, **dadurch gekennzeichnet, dass** das Getriebe (10) als Planetengetriebe nach Anspruch 8, 9 oder 10 ausgebildet ist.

12. Windkraftanlage (70), umfassend eine Gondel (71), an der drehbar ein Mehrblattrotor (72) und ein Generator (84) angebracht sind, wobei der Mehrblattrotor (72) drehmomentübertragend über einen Antriebsstrang (76) mit dem Generator (84) verbunden ist und der Antriebsstrang (76) nach Anspruch 11 ausgebildet ist.
